# EUROPEAN PATENT APPLICATION

(11) **EP 2 610 804 A2**
(43) Date of publication of application: **03.07.2013**
(21) Application number: 12196623.8
(22) Date of filing: 12.12.2012
(51) Int. Cl.: G06Q 30/02

(54) **System and method for profiling users for mobile advertisements**

(30) Priority: 02.01.2012 IN CH00282012
(71) Applicant: Alcatel Lucent, 75007 Paris (FR)
(72) Inventor: Govindaraj, Dinesh, 560094 Bangalore, Karnataka (IN); Nandi, Animesh, 560045 BANGALORE (IN); Pattabhiraman, Ramesh V, New Albany, OH Ohio 43054 (US); Majumder, Anirban, 560045 BANGALORE (IN); Datta, Samik, 560045 BANGALORE (IN); Menon, Sreedal, 560092 KARNATAKA BANGALORE (IN)
(74) Representative: Raets, David

(57) **Abstract**

The embodiments disclosed herein relates to a method and system for profiling users for selective content delivery service. Further, Users are profiled based on location, call graph and/or demographic data associated with the users. Further, the method of place profiling of users in the proposed invention effectively reduces/eliminates possible occurrence of noise in the place profiling process. After profiling the users, a targeted content delivery module selects contents matching the profile of each user and delivers selected contents to corresponding user. Further, the system maintains a database of locations and corresponding parameters such as signal strength, address, GPS coordinate, Bluetooth ID and so on. When a user device location is to be traced, the system obtains cell-Id and signal strength of the device and compares the obtained values with the database so as to obtain a location match for the user device.

## Description

### TECHNICAL FIELD

The embodiments herein relate to communications and, more particularly, to a system and method for profiling subscribers in a mobile communication network.

### BACKGROUND

Telecom operators are always looking for ways to increase their revenues. For this purpose, Value Added Services (VAS), Over the Top (OTT) services are being offered by operators to the subscribers. As more number of subscribers register for these services the revenue of the operator increases. Among the various VAS; targeted advertising has emerged as one of high revenue generating service and hence, advertising firms are now using mobile advertisement to deliver advertisements to the users through mobile communication devices.

Earlier mobile advertisement techniques employed advertisement servers (ad-server) to broadcast the advertisement contents without considering interests of the mobile users. The drawback associated with this method is that a user may receive an advertisement on his/her mobile device which is not of the user's interest. As a result, the user may lose interest in the ad-service and may even avoid further ads even if they are of interest to the user. In order to solve this issue, mechanisms for selective advertisements were launched.

In selective advertisement method, a dedicated system tries to identify user's interest/s and groups users having similar interests. Then the ad-server broadcasts ads suitable for users in each group. The existing user specific ad service techniques uses location based profiling as one of the user profiling technique in which the system trace the location of users and classify the user devices based on the location of users. In addition, there are other sources such as call logs and location tracks that can be used to build useful profile information about these users. These are mainly based on inferences. Once such inferences are associated with subscriber profiles, they can be used to enable various applications. However, inferences are only probabilistically true and due to this the results of these statistics are not always correct.

Further, as existing selective advertisement methods employ only location based mechanisms for profiling they are not very effective. This is because of the presence of high level noise in existing location based profiling techniques. This in turn may result in misjudgment of a user's location.

There are several works which aim at profiling a user using Web-browsing behaviour (like what's done by Google), content consumption behaviour (like Netflix, Amazon), channel behaviour in IPTV systems (like what's now employed by several TELCOs) etc. Several models for passive-profiling have been researched upon to improve the efficiency of profiling and the quality of recommendations done using the built profile. Most of these systems however deal with data sources where the level of noise is comparatively much lower than the noise in the data sources that a mobile operator is dealing with. For example, in the Netflix profiling system, the act of someone purchasing a lot of Comedy movies does infact imply that the person is interested in this genre category.

In contrast, the mobile operator is dealing with data sources which inherently have a lot of noise in it. Consider a case where inferences are drawn from location tracks of users. For example, if the location tracks of a user show frequent visits to an affluent shopping mall area, it may be deduced that the subscriber belongs to a rich segment of the society. Similarly, if a subscriber spends a significant time during the day in a Technology Park, it may be deduced that the person belongs to the educated and well-settled segment of the society. But the above inferences may be only probabilistically true. For example, the person who frequents an affluent shopping mall could be a vendor who provides water supplies to the stores, instead of an affluent customer. Similarly, a person who spends a significant amount of time at the technology park could be a security guard instead of the technology-professional that we might be tempted to infer. So clearly there is a gap in drawing inferences about a user merely from the location tracks of the user.

On a similar note, inferences may be drawn from call graphs as well. For example, if a subscriber A has been observed to call several Chinese restaurants, then it may be deduced that this person has some affinity towards Chinese food. But clearly this is not always true as even a noodles whole seller might be calling Chinese restaurants. Similarly, can any observations be made from the calls made to other fellow subscribers to infer something about the subscriber? If it is observed that a user makes a lot of calls to subscribers who have been profiled to be software professionals, can it be inferred that this user is also a software professional. Here again, though it seems to be the most probable, it is still probabilistic. For example, the user may be a person who cooks in the houses of professionals (most of whom happen to be software proferssionals). Hence, there is a requirement to design robust techniques for inference.

As a result, more sophisticated techniques (as compared to those used in conventional domains of Web browsing, content consumption etc) are needed to profile users in the presence of inherent noise in the data sources possessed by a mobile operator.

Geolife, a project from Microsoft Research, Beijing is a location-based social-networking service. It enables users to share life experiences and build connections among each other using human location history. GeoLife relies on its users to share their GPS trajectories. By mining multiple users' location histories, it can discover the top most interesting locations, classical travel sequences and travel experts in a given geospatial region, hence enable a generic travel recommendation. By understanding individual location history, GeoLife can measure the similarity between users and perform personalized friend & location recommendation.

Geolife does inference using location tracks and trajectory comparison only; however Geolife does not perform optimally in situations in the presence of noise that is inherent in location tracks. In particular, as we will show in our solution, our proposal incorporates an idea of using correlation across places to reduce the chances of mis-classifying two people as being similar.

### SUMMARY

In view of the foregoing, an embodiment herein provides a method of profiling user in a communication network. The method comprises steps of creating place profile of the user, fetching call graph of the user from a remote location, fetching demographic data related to the user from the remote location and building the user's profile based on the place profile, the call graph and the demographic data. The method wherein the fetching of the call graph of the user from the remote location comprising constructing a community structure from the call graph. The method wherein the creating place profile further comprise creating a first matrix, creating a second matrix from the first matrix, calculating a correlation value for the user from the second matrix, determining a place profile for the user based on the correlation value and assigning the place profile to the user. The first matrix is a user-place association matrix. The second matrix is a place-place correlation matrix. The method wherein the fetching of demographic data further comprises obtaining cell-id corresponding to the user's mobile device, obtaining signal strength corresponding to the user's location and tracing location of the user, based on the cell-id and the signal strength. The method further comprising comparing the cell-id and the signal strength with a database. The database comprises information on signal strength vectors, address, GPS coordinates and Bluetooth Id corresponding to locations. The method further employs the built profile for target based advertisements by operators of the user.

Embodiments further disclose a system for profiling user in a communication network. The system comprising a Base Station Subsystem (BSS), a network server, plurality of users. Further the system provided with means for creating place profile of the user, fetching call graph of the user from a remote location, fetching demographic data related to the user from the remote location and building the user's profile based on the place profile, the call graph and the demographic data. The system fetches the call graph of the user from the remote location by constructing a community structure from the call graph. The place profile is created by creating a first matrix, creating a second matrix from the first matrix, calculating a correlation value for the user from the second matrix, determining a place profile for the user based on the correlation value and assigning the place profile to the user. The first matrix is a user-place association matrix. The second matrix is a place-place correlation matrix. The system fetches the demographic by obtaining cell-id corresponding to the user's mobile device, obtaining signal strength corresponding to the user's location and tracing location of the user, based on the cell-id and the signal strength. The system compares the cell-id and the signal strength with a database. The database comprises information on signal strength vectors, address, GPS coordinates and Bluetooth Id corresponding to locations. The system further employs the built profile for target based advertisements by operators of the user.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates a general block diagram of a mobile communication network as disclosed in the embodiments herein;

FIG. 2 illustrates a general block diagram of a content delivery network as disclosed in the embodiments herein;

FIG. 3 illustrates a block diagram which shows components of a targeted content delivery module as disclosed in the embodiments herein;

FIG. 4 illustrates a block diagram which shows components of memory module as disclosed in the embodiments herein;

FIG. 5 illustrates a flow diagram which shows the method of tracing location of users as disclosed in the embodiments herein;

FIG. 6 illustrates a flow diagram which shows the method for place profiling of users as disclosed in the embodiments herein;

FIGS. 7a and 7b shows exemplary illustrations of a first matrix and a second matrix as disclosed in the embodiments herein; and

FIG. 8 illustrates a flow diagram which shows the method of building profiles for users as disclosed in the embodiments herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

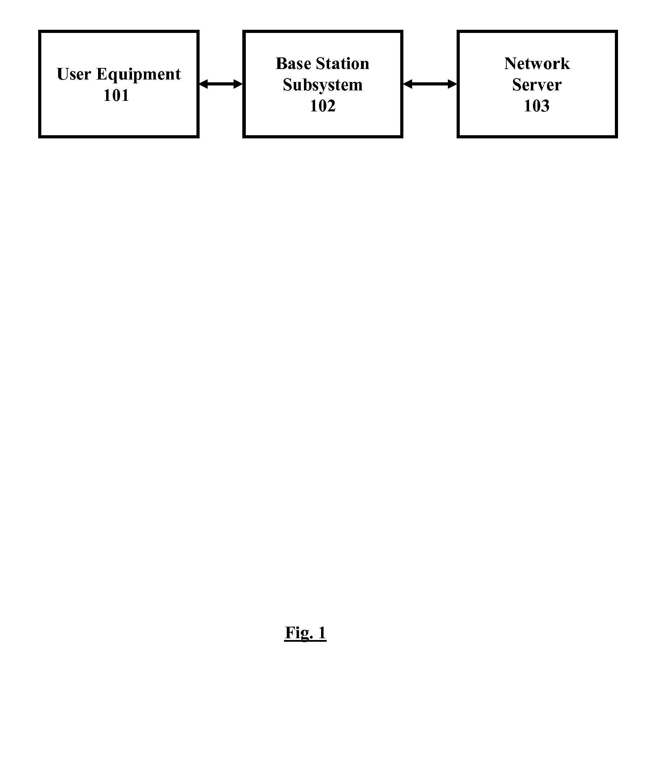

The embodiments herein disclose a system for efficiently profiling a mobile user using location tracks, call graphs, and other subscriber data available in the operator ecosystem, inspite of the inherent noise in the data sources. Referring now to the drawings, and more particularly to FIGS. 1 through 8, where similar reference characters denote corresponding features consistently throughout the figures, there are shown embodiments.

FIG. 1 illustrates a general block diagram of a mobile communication network as disclosed in the embodiments herein. The network comprises User Equipment 101, Base Station Subsystem (BSS) 102 and the Network Server 103. User equipments (UE) 101 are connected to the network server 103 through Base station subsystem (BSS) 102. In an embodiment, the User Equipment 101 may be a mobile phone, smart phone, PDA or any such mobile communication device. The Base Station Subsystem (BSS) 102 is responsible for handling traffic and signalling between UE 101 and the network server 103. The BSS 102 is further responsible for processes like allocation of radio channels to UEs 101, transmission and reception over air interface and so on. The network server 103 connects the UE 101 to the network subsystem and the GPRS network within the service provider's network.

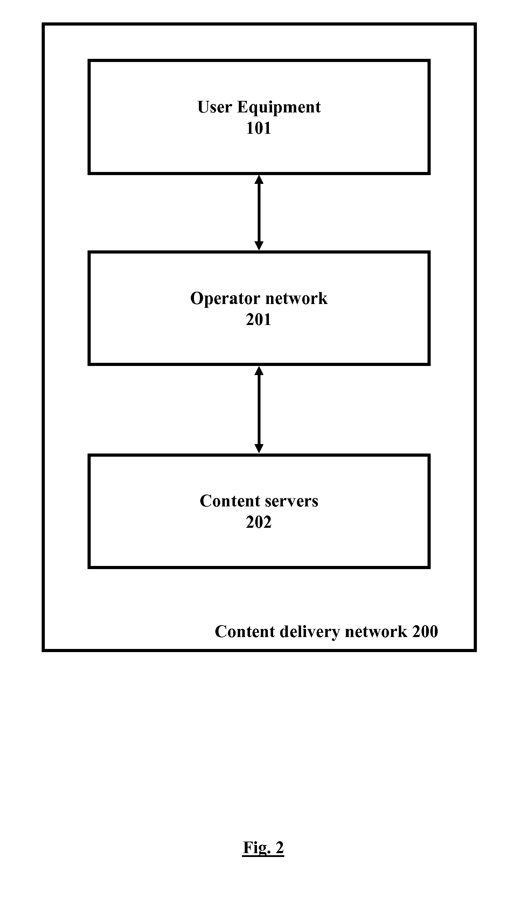

FIG. 2 illustrates a general block diagram of a content delivery network as disclosed in the embodiments herein. The network comprises User Equipment 101, operator network 201 and content server 202. A specific user profiling module in the content servers 202 fetch the details of user equipments 101 from the operator network 201. In an embodiment, the details fetched by the content servers 202 may comprise place profile of the user, call graph of the user, interests and/or any other data related to the user which can be used for profiling of the user. In another embodiment, the content server 202 selects contents suitable for each user based on the user profile of that particular user. In another embodiment, the content server 202 delivers selected contents to the corresponding users.

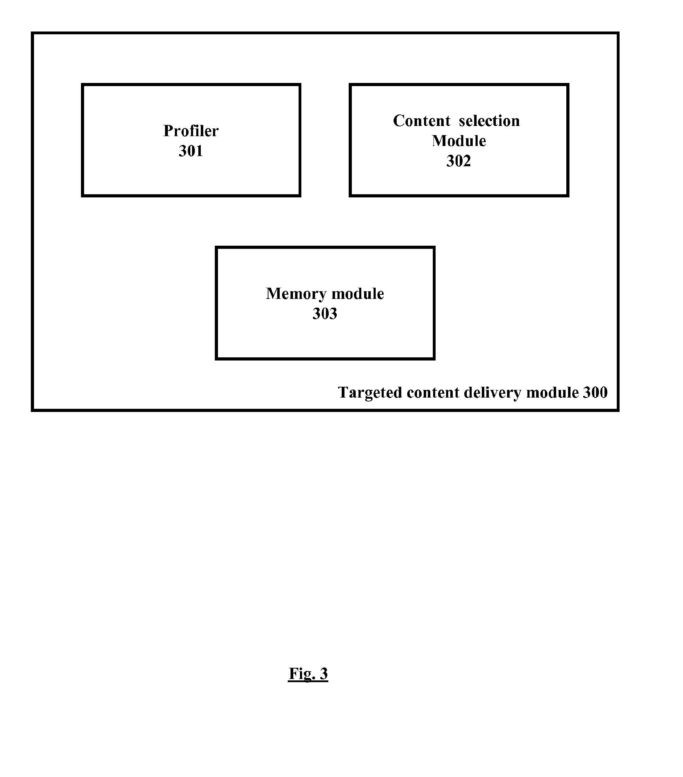

FIG. 3 illustrates a block diagram which shows components of a targeted content delivery module as disclosed in the embodiments herein. The system comprises a profiler 301, content selection module 302 and a memory module 303. In an embodiment, the memory module 303 contains informations fetched from a remote location. In another embodiment, the remote location may be an operator network 201. In another embodiment, the fetched information may refer to the information related to the mobile subscribers. Further, the profiler 301 is responsible for profiling of users. The profiler 301 fetches data related to customers and/or user equipments from the memory module 303. In an embodiment, the data fetched by the profiler from the memory module 303 may comprise any or all of call log of user, place profile of the user, demographic data related to user and/or any such data that may help the profiler to efficiently build profile corresponding to each user. Further, the user profiles created by the profiler 301 are stored in a memory module 303. Further, the content selection module 302 selects contents which match the profile of each user. In an embodiment, the content selection module fetches and analyzes the user profiles created by the profiler 301 to select the contents suitable for each user. In another embodiment, the selected contents are then delivered to corresponding users.

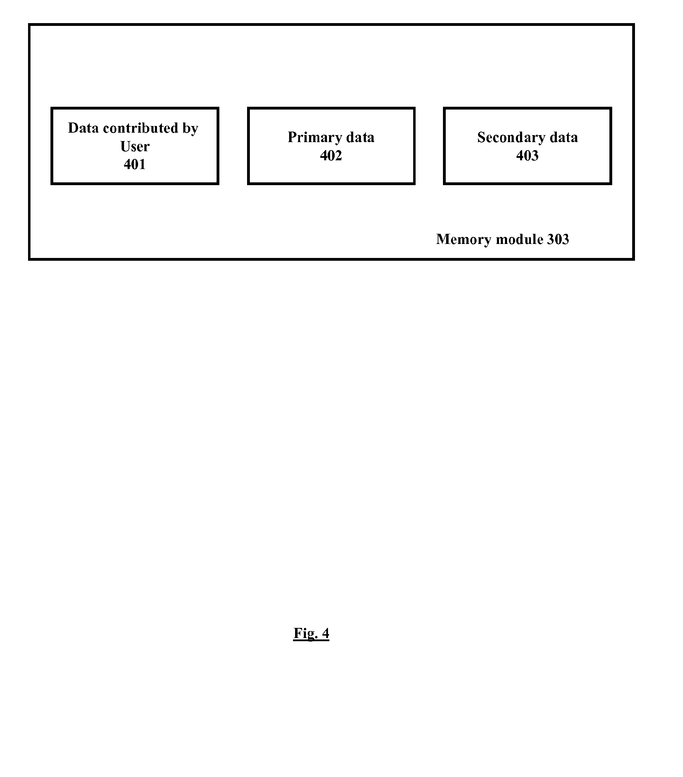

FIG. 4 illustrates a block diagram which shows components of memory module as disclosed in the embodiments herein. The memory module 303 comprises primary data 402, secondary data 403 and data contributed by user 401. Primary data 402 refers to the data, operator network possess for every subscriber. In an embodiment, the primary data may comprise call graphs, billing information, cell-based location information, subscriber informations obtained during registration process (age, gender and so on) and so on. Further, the secondary data 403 may refer to additional data possessed by network server related to certain users based on the interactions of user equipments 101 with the operator network 201. In an embodiment, the user interactions may refer to any or all of the activities like buying of ringtones/songs/videos and/or applications downloaded from the portals and so on. Further, the user contributed data 403 may refer to additional data related to certain users which may comprise any or all of GPS coordinates, phone book contacts, LBS checkins and so on related to the users. In an embodiment, the profiler 301 makes use of the data from memory module 303 to profile the users.

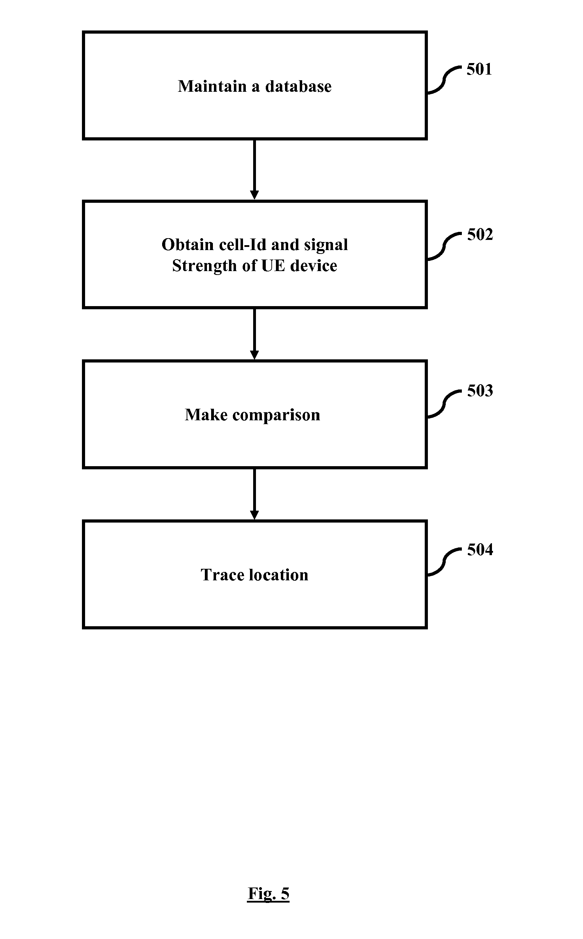

FIG. 5 illustrates a flow diagram which shows the method of tracing location of users as disclosed in the embodiments herein. Initially, a database is maintained (501) within the memory module 303. In an embodiment, the database contains informations related to locations. In another embodiment, the informations comprise any or all of signal strength vectors corresponding to each location, address, GPS coordinates, Bluetooth ID corresponding to each location and/or any such parameter that can be used to uniquely identify a location. In another embodiment, the operator network 103 may use a Geo-location - Application Programming Interface (Geo-API) so as to decipher location address to corresponding GPS translation of the location for which the GPS coordinates are not available directly. In another embodiment, the operator network 103 indexes the information corresponding to a primary cell-id. Further, when a UE 101 location is to be identified, the system fetches (502) the primary cell-id and signal-strength vector perceived by the UE. The system then compares (503) the fetched data with the data in the database to find a match. When a match is found the user's location is approximated as being the GPS coordinate of this closest-match location and corresponding location is considered (504) as the location of the user. The various actions in method 500 may be performed in the order presented, in a different order or simultaneously. Further, in some embodiments, some actions listed in FIG. 5 may be omitted.

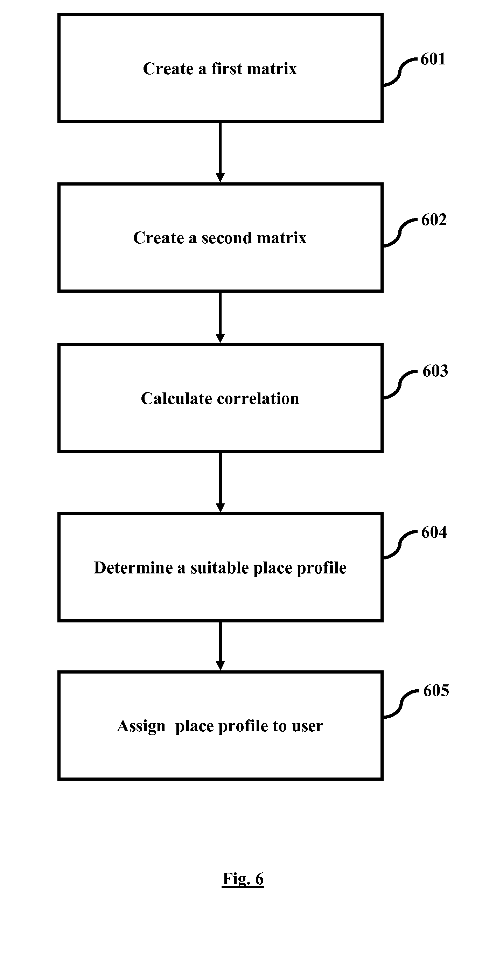

FIG. 6 illustrates a flow diagram which shows the method for place profiling of users as disclosed in the embodiments herein. In an embodiment, the present application uses a noise-resilient profile inference based method for profiling the users. The method initially builds (601) a first matrix. In an embodiment, the first matrix is a user-place association matrix. In another embodiment, the user-place association matrix is used to identify prominent places visited by each user. Further, the system builds (602) a second matrix. In an embodiment, the second matrix is built by considering information from the first matrix. In another embodiment, the second matrix is a place-place correlation matrix. In another embodiment, the place-place correlation matrix helps to effectively profile a user by analyzing the correlation between various places prominently visited by the user. For each user, a correlation value is calculated (603) from the second matrix. Further, based on the correlation value, a place-profile suitable for each user is determined (604). Further, the selected place profile is assigned (605) to corresponding users. In another embodiment, the system applies a particular place tag for a user based on the analysis made from the place-place correlation matrix. The various actions in method 600 may be performed in the order presented, in a different order or simultaneously. Further, in some embodiments, some actions listed in FIG. 6 may be omitted.

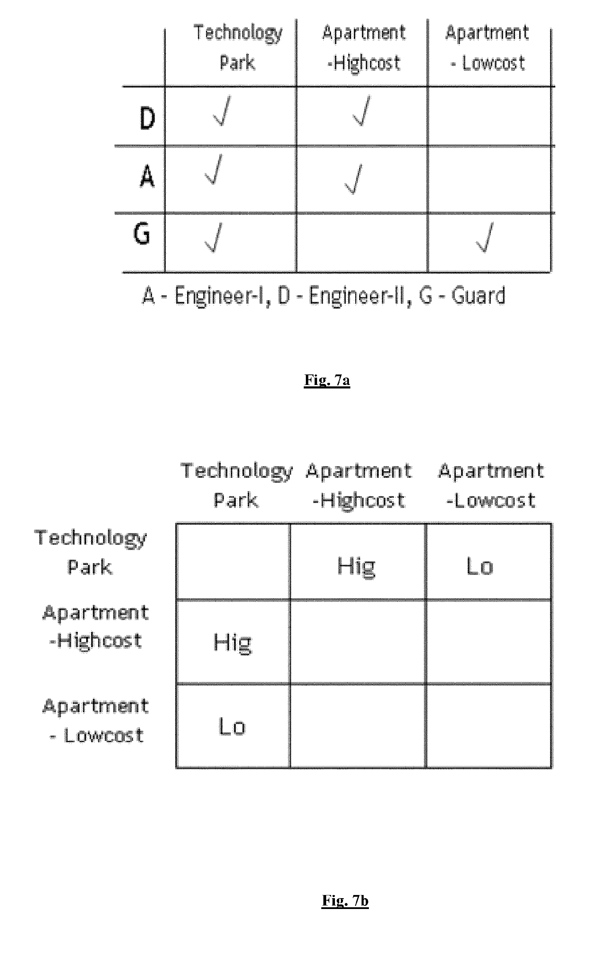

FIGS. 7a and 7b shows exemplary illustrations of a first matrix and a second matrix used for place profiling of users respectively as disclosed in the embodiments herein. In an embodiment, the method of constructing matrices for place profiling eliminates/reduces possible occurrence of noise in the process of place profiling. In another embodiment, the first matrix (Fig. 7a) is a user-place association matrix. In another embodiment, the user-place association matrix can be used to identify prominent places visited by each user. In the first matrix, A and D are software engineers and G is a security guard. The system identifies that A&D spends significant amount of time in the technology park as well as in high cost apartments whereas G, being a security guard, spends significant amount of time in the technology park as well as in a low cost apartment. The system then distinguishes between security guard G and the software engineers A&D by considering the difference in traits of G and A and D.

In another embodiment, the second matrix (Fig. 7b) is a place-place correlation matrix. In another embodiment, the place-place correlation matrix can be used for effectively profiling a user by analyzing the correlation between various places prominently visited by the user. The system calculates high correlation between a technology park and a high cost apartment whereas a low correlation is calculated between a technology park and a low cost apartment. In an embodiment, the system assigns place-profile for a user based on the correlation value calculated for that particular user.

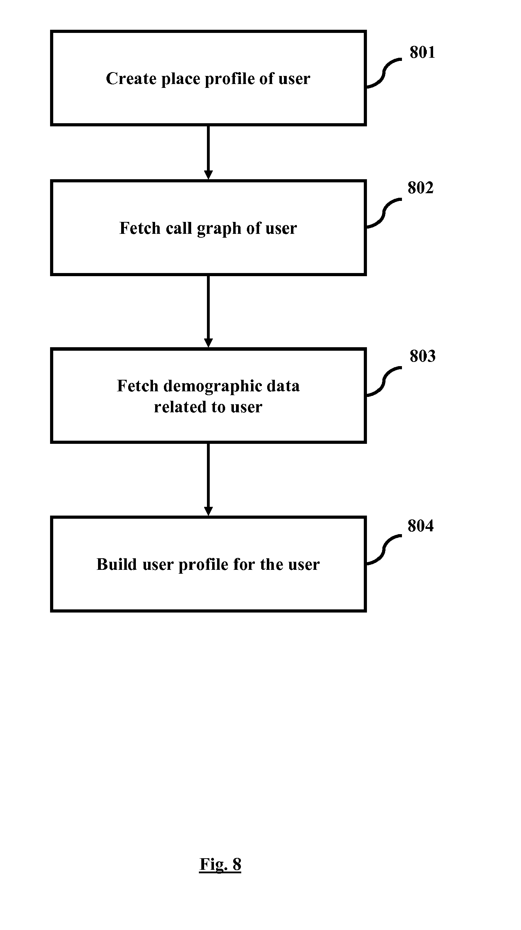

FIG. 8 illustrates a flow diagram which shows the method of building profiles for users as disclosed in the embodiments herein. In an embodiment, the present invention makes use of multimodal informations for the purpose of profiling of users. In another embodiment, the multimodal information may comprise place profile, call graphs, demographic data possessed by the mobile user and/or any suitable data that can be used or profiling of users. The system initially perform (801) place profiling of a user. In an embodiment, place profile corresponding to a user is created and is assigned to that user. Further, the system fetches (802) call graph of that particular user. In an embodiment, the system constructs a community structure from the call graph. In another embodiment, the community structure comprises a group of users having very similar interests. In another embodiment, a majority profile is identified from the community structures and is applied to the members of that community. Further the system fetches (803) any demographic data associated with the mobile user. In an embodiment, the system may fetch additional informations available regarding the user. In another embodiment, additional informations may comprise any or all of monthly billing informations, portal interactions such as download and use of caller tunes, ring tones, music, videos, applications downloaded from operator portal and/or any such information available related to the user. In another embodiment, the system analyzes the informations fetched related to a user. In another embodiment, by analyzing the informations related to a particular user, the system determines characteristics and/or preferences of that user. Further, based on the analysis the system builds (804) a user profile corresponding to that particular user. In an embodiment, the content selection module 302 selects contents for each user based on the user profile of each user. In another embodiment, the system identifies preferences of a user from the user profile corresponding to that particular user and selects contents matching the user preferences. Further, the selected contents are delivered to the corresponding user. The various actions in method 800 may be performed in the order presented, in a different order or simultaneously. Further, in some embodiments, some actions listed in FIG. 8 may be omitted.

The embodiments disclosed herein can be implemented through at least one software program running on at least one hardware device and performing network management functions to control the network elements. The network elements shown in Fig. 3 include blocks which can be at least one of a hardware device, or a combination of hardware device and software module.

The embodiment disclosed herein specifies a system for targeted content delivery. The mechanism allows selection and delivery of contents matching user interests providing a system thereof. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in a preferred embodiment through or together with a software program written in e.g. Very high speed integrated circuit Hardware Description Language (VHDL) another programming language, or implemented by one or more VHDL or several software modules being executed on at least one hardware device. The hardware device can be any kind of device which can be programmed including e.g. any kind of computer like a server or a personal computer, or the like, or any combination thereof, e.g. one processor and two FPGAs. The device may also include means which could be e.g. hardware means like e.g. an ASIC, or a combination of hardware and software means, e.g. an ASIC and an FPGA, or at least one microprocessor and at least one memory with software modules located therein. Thus, the means are at least one hardware means and/or at least one software means. The method embodiments described herein could be implemented in pure hardware or partly in hardware and partly in software. The device may also include only software means. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the claims as described herein.

## Claims

1. A method of profiling a user in a communication network, said method
comprising:
Building a first correlation, wherein said first correlation is based on place profile of said user;
Building a second correlation, wherein said second correlation is based on call graph of said user; and
Building a profile for said user based on
comparing said first correlation with other users who have similar place profiles to said user; and
comparing said second correlation with other users who have similar call graphs to said user.

2. The method, as claimed in claim 1, wherein fetching of said call graph of said user from said remote location comprises constructing a community structure from said call graph.

3. The method, as claimed in claim 1, wherein creating said place profile further comprises:
creating a first matrix;
creating a second matrix from said first matrix;
calculating a correlation value for said user from said second matrix;
determining a place profile for said user based on said correlation value; and
assigning said place profile to said user.

4. The method, as claimed in claim 3, wherein said first matrix is a user-place association matrix.

5. The method, as claimed in claim 3, wherein said second matrix is a place-place correlation matrix.

6. The method, as claimed in claim 1, wherein said method further comprises of using demographic information of said user for building said profile.

7. The method, as claimed in claim 6, wherein fetching of said demographic data further comprises
obtaining cell-id corresponding to said user's mobile device;
obtaining signal strength corresponding to said user's location; and tracing location of said user, based on said cell-id and said signal strength.

8. A system for profiling user in a communication network, said system comprising a Base Station Subsystem (BSS), a network server, plurality of users, further said system provided with at least one means configured for
Building a first correlation, wherein said first correlation is based on place profile of said user;
Building a second correlation, wherein said second correlation is based on call graph of said user; and
Building a profile for said user based on
comparing said first correlation with other users who have similar place profiles to said user; and
comparing said second correlation with other users who have similar call graphs to said user.

9. The system, as claimed in claim 8, wherein said system is configured for fetching said call graph of said user from said remote location by constructing a community structure from said call graph.

10. The system, as claimed in claim 8, wherein said system is configured for creating said place profile by:
creating a first matrix;
creating a second matrix from said first matrix;
calculating a correlation value for said user from said second matrix;
determining a place profile for said user based on said correlation value;
and assigning said place profile to said user.

11. The system, as claimed in claim 10, wherein said system is configured for creating said first matrix as a user-place association matrix.

12. The system, as claimed in claim 10, wherein said system is configured for creating said second matrix as a place-place correlation matrix.

13. The system, as claimed in claim 8, wherein said system is further configured for using demographic information of said user to build said profile.

14. The system, as claimed in claim 13, wherein said system is configured for fetching of said demographic data by
obtaining cell-id corresponding to said user's mobile device;
obtaining signal strength corresponding to said user's location; and tracing location of said user, based on said cell-id and said signal strength.
